# FASCICULE DE BREVET EUROPEEN

(11) **EP 0 491 314 B1**
(45) Date de publication et mention de la délivrance du brevet: **30.11.1994**
(21) Numéro de dépôt: 91121501.0
(22) Date de dépôt: 16.12.1991
(51) Int. Cl.: H02B 13/045

(54) **Agencement de fond d'enveloppe d'appareillage à haute tension sous enveloppe métallique â isolation gazeuse en particulier pour raccordement de câble**
Bodenanordnung für Verkapselung von Hochspannungsgeräten in gasisolierten Metallgehäusen, insbesondere für Kabelverbindungen
Bottom arrangement for encapsulation of high voltage equipment in gas insulated, metallic enclosures, especially for cable connections

(30) Priorité: 18.12.1990 FR 9015838
(43) Date de publication de la demande: 24.06.1992
(73) Titulaire: GEC ALSTHOM SA, 75116 Paris (FR)
(72) Inventeur: Delcoustal, Jean-Marie, F-73100 Aix les Bains (FR)
(74) Mandataire: Weinmiller, Jürgen

(56) Documents cités:
- CH-A- 500 605
- GB-A- 377 049

## Description

La présente invention se rapporte à un agencement de fond d'enveloppe d'appareillage à haute tension sous enveloppe métallique à isolation gazeuse en particulier pour raccordement de câble.

L'invention concerne plus précisément les enveloppes métalliques, en général en aluminium, protégeant le raccordement de câble à haute tension.

De tels raccordements sont installés en extrémité d'une installation électrique dont les composants sont sous enveloppe métallique, l'isolation étant en général réalisée par de l'hexafluorure de soufre.

Ces installations comprennent donc plusieurs cellules dont les enveloppes métalliques sont reliées les unes aux autres avec étanchéité, l'ensemble de l'appareillage étant dans le gaz isolant.

De façon générale, une installation électrique de ce type comporte des enveloppes métalliques de forme cylindrique et installées verticalement pourvues d'un certain nombre de fenêtres de liaison auxquelles se raccordent des enveloppes cylindriques disposées horizontalement.

Le raccordement de câble se fait verticalement en partie inférieure d'une enveloppe verticale, le câble étant protégé dans la cellule par un isolateur tronconique portant à sa partie haute un appareillage de connexion aux autres appareillages.

Les dimensions et tolérances des isolateurs de câbles et des enveloppes métalliques sont fixées par des normes spécifiques, afin que leur montage puisse être réalisé dans des conditions d'étanchéité et de positionnement admissibles.

Pour ce faire, les enveloppes sont reliées les unes aux autres par des agencements de liaison comprenant des joints comprimés dans leur logement et associés à des épaulements d'encastrement, la solidarisation se faisant par boulonnage.

Par ailleurs en partie basse, une telle enveloppe comporte un fond annulaire démontable assurant la jonction du socle de l'isolateur de câble et d'un flasque annulaire de l'enveloppe. Un tel fond est d'une part fixé au flasque de l'enveloppe par boulonnage avec épaulement et joint et d'autre part est relié par vissage à une pièce de maintien annulaire inférieure, le socle de l'isolateur étant bridé entre ces deux éléments et des joints étant interposés entre les parties en contact.

Cet agencement de liaison d'enveloppes pose des problèmes de démontage qui vont être explicités ci-dessous. En effet, il peut être nécessaire en cas d'incidents de fonctionnement de démonter l'enveloppe métallique. Il faut alors dégager les agencements de liaison dans le plan horizontal au niveau du fond déjà décrit et dans le plan vertical au niveau de la liaison entre une fenêtre de l'enveloppe et l'enveloppe adjacente. Compte tenu de la rigidité de l'enveloppe, un tel démontage, sans déplacement du câble et de son isolateur, nécessiterait la combinaison d'un déplacement vertical (pour déboîter l'agencement de liaison horizontal entre enveloppe et fond) et d'un déplacement horizontal (pour déboîter l'agencement de liaison vertical entre enveloppes).

Ces deux déplacements ne pouvant se réaliser, puisqu'on se trouve devant un autoblocage mutuel des deux agencements de liaison, il est nécessaire de déplacer légèrement le câble et en particulier son isolateur pourvu du fond d'enveloppe, afin de dégager l'agencement de liaison du fond, ce qui permet alors la translation horizontale de l'enveloppe pour dégager l'agencement de liaison vertical puis la levée de l'enveloppe pour son démontage complet.

Or le traitement de l'enveloppe et celui du câble sont réalisés par des techniciens spécialisés les uns dans la fabrication des enveloppes métalliques et les autres dans celle des câbles. Le démontage de l'enveloppe métallique nécessite donc l'intervention de ces deux corps de métier sur le site, ces deux corps de métier étant responsables de chacune de ces opérations. Ceci pose des problèmes de logistique importants.

Par ailleurs les câbliers sont réticents à déplacer le câble, car ce déplacement est une opération délicate. En effet, les câbles et leur gaine/sont relativement raides et donc leur déplacement entraîne des contraintes mécaniques au sein des câbles qui peuvent avoir pour conséquence des problèmes électriques non négligeables.

Le but de l'invention est de procurer un agencement de fixation de l'enveloppe au niveau de son fond qui permette le démontage de l'enveloppe métallique sans aucun déplacement du câble.

Pour ce faire, l'invention concerne un fond d'enveloppe d'appareillage à haute tension sous enveloppe métallique à isolation gazeuse, en particulier pour raccordement de câbles comportant une pièce d'adaptation reliée par boulonnage à un flasque périphérique de l'enveloppe avec interposition d'un joint d'étanchéité et venant brider au moins un socle d'isolation de câble par vissage avec une pièce de maintien inférieure avec interposition de joints d'étanchéité.

Le fond est remarquable en ce que la pièce d'adaptation est constituée d'au moins deux parties concentriques reliées l'une à l'autre de façon démontable et étanche, dont l'une dite première pièce assure le bridage du ou des socles d'isolateur et dont une autre dite deuxième pièce est annulaire et est reliée au flasque de l'enveloppe.

Grâce à cet agencement, il est possible de démonter l'agencement de liaison du flasque de l'enveloppe et du fond, par seul démontage d'une des parties de la pièce d'adaptation. Ce démontage peut ainsi se faire sans déplacement particulier de l'enveloppe.

De préférence, afin de faciliter ce démontage, une partie de la pièce d'adaptation est libérable par désolidarisation et déplacement vers le bas.

Selon un mode de réalisation préféré, c'est la deuxième pièce qui est libérable de la première pièce par désolidarisation et déplacement vers le bas, et de préférence le diamètre intérieur de la deuxième pièce est supérieur à l'encombrement maximal de la ou des pièce(s) de maintien inférieure(s).

Selon ce mode de réalisation préféré, le fond ne comporte que deux parties et le démontage de la deuxième pièce se réalise par le bas, son diamètre intérieur étant tel qu'elle peut être dégagée de la ou des pièce(s) de maintien inférieure(s) et déposée.

Plus précisément, la première pièce peut comporter à sa périphérie un talon supérieur coopérant avec un talon inférieur de la deuxième pièce et ces deux pièces sont solidarisées par boulonnage.

Enfin pour permettre le déplacement horizontal de l'enveloppe afin de la dégager de son agencement de liaison vertical, le diamètre extérieur de la première pièce est inférieur au diamètre intérieur de l'enveloppe. Ainsi il est prévu un jeu suffisant entre la paroi intérieure du flasque et la paroi extérieure du talon supérieur de la première partie pour permettre ce déplacement de l'enveloppe.

L'invention est exposée ci-après plus en détail à l'aide d'un dessin représentant seulement un mode d'exécution.

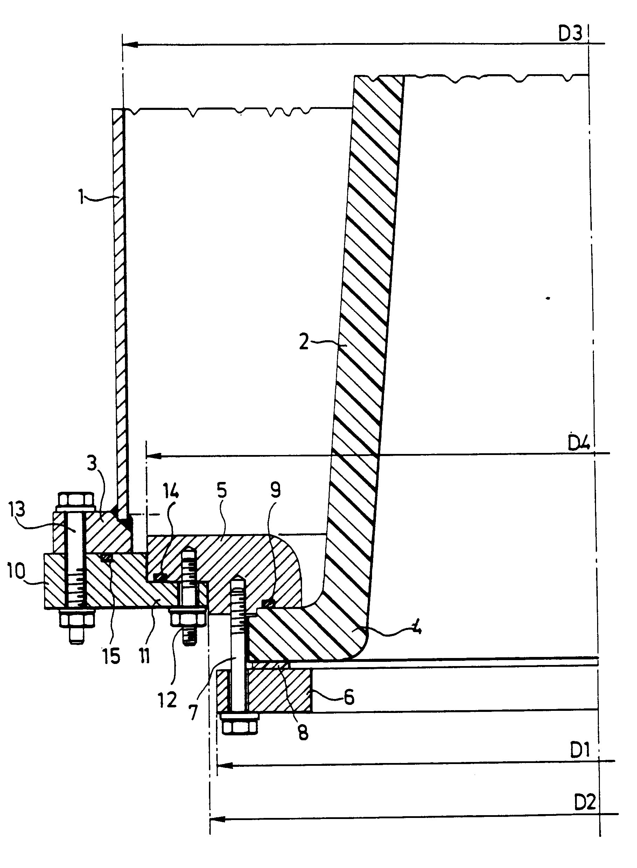

La figure unique représente une vue partielle en coupe longitudinale verticale d'un fond d'enveloppe conforme à l'invention, au droit des agencements de fixation.

Dans un but de simplification les différents boulons et vis reliant les différentes pièces composant le fond sont représentés alignés radialement. Ils peuvent pour des raisons de manipulation être décalés les uns des autres sur la périphérie du fond.

Par ailleurs, plusieurs ensembles de vis et de boulons sont prévus sur la périphérie du fond afin de réaliser une fixation et une étanchéité correcte.

L'enveloppe est supportée par un châssis qui n'est pas représenté sur la figure. Ce châssis est démontable et est relié au fond de l'enveloppe généralement par des tiges filetées relativement longues qui laissent suffisamment de débattement pour permettre le démontage du fond comme il va être décrit ci-après.

Sur la figure est représenté l'isolateur tronconique du câble 2 équipé de l'enveloppe métallique 1 à l'aide d'un agencement de fond faisant l'objet de l'invention. L'enveloppe 1 comporte à son extrémité inférieure un flasque annulaire 3, solidaire de l'enveloppe 1 en général par soudage.

L'isolateur 2 est conformé avec un socle périphérique annulaire 4 qui est bridé entre une première pièce 5 annulaire du fond et une pièce de maintien inférieure 6. La fixation de la première pièce 5 et de la pièce de maintien 6 se fait par une vis 7 traversant un orifice de la pièce de maintien 6 et vissée dans un orifice fileté de la première pièce 5. L'étanchéité est assurée par un joint annulaire 8 inséré entre la pièce de maintien 6 et le socle 4 de l'isolateur et un joint 9 comprimé dans un logement ménagé dans la première pièce 5. Le positionnement de la première pièce 5 est assuré par des épaulements agencés dans le socle 4 et la première pièce 5.

La fixation du flasque 3 de l'enveloppe 1 est complétée par une seconde pièce 10 annulaire. Cette seconde pièce 10 présente un talon 11 venant s'appliquer dans un épaulement de la première pièce 5 et dans lequel est logé un boulon 12 vissé dans la première pièce 5, le talon 11 étant retenu par vissage d'un écrou. Par ailleurs un assemblage par vis et écrou 13 réalise le serrage du flasque 3 de l'enveloppe 1 avec la seconde pièce 10.

Un joint 14 logé dans la première pièce 5 assure l'étanchéité entre cette dernière et la seconde pièce 10. Un autre joint 15 logé dans la seconde pièce 10 assure l'étanchéité entre le flasque 3 et la seconde pièce 10.

Lorsqu'il est nécessaire de démonter et d'enlever l'enveloppe 1, l'ensemble vis et écrou 13 et l'écrou du boulon 12 sont dévissés afin de libérer la seconde pièce 10, par le bas.

Son diamètre intérieur D2 étant supérieur au diamètre extérieur D1 de la pièce de maintien 6, la seconde pièce 10 peut être déplacée vers le bas et être déposée, libérant ainsi le flasque 3 de l'enveloppe 1. Ce dernier est ainsi dégagé, sans être déplacé, de son agencement de fixation avec le fond.

Le diamètre intérieur D3 de l'enveloppe étant supérieur au diamètre extérieur D4 de la première pièce 5, l'enveloppe 1 peut être déplacée en translation horizontale, pour être dégagée de son agencement de fixation vertical.

Elle est ensuite levée de façon classique pour être démontée complètement.

Dans la description précédente, a été décrit un système de fond d'enveloppe ne recevant qu'un seul raccordement de câble. L'invention concerne également les agencements de raccordement de plusieurs câbles. Dans ce cas, seule la forme de la première pièce 5 est modifiée, associée à plusieurs socles 4 d'isolateur par l'intermédiaire de plusieurs pièces de maintien inférieures 6. L'agencement de la seconde pièce 10 annulaire et son principe de démontage ne varient pas.

En particulier la présente invention s'applique également aux boîtes à câbles triphasés dans lesquelles le fond porte trois têtes de câble monophasé. Dans ce cas la première pièce 5 est en forme de disque percé de trois trous d'introduction des têtes de câbles en général répartis de façon régulière, à proximité de sa périphérie. Le diamètre intérieur D2 de la deuxième pièce 10 est alors supérieur à l'encombrement maximal D1 des trois pièces de maintien inférieures 6, cet encombrement maximal D1 étant égal au diamètre du cercle circonscrit aux trois pièces de maintien inférieures 6.

## Revendications

1. Fond d'enveloppe d'appareillage à haute tension sous enveloppe métallique à isolation gazeuse, en particulier pour raccordement de câble, comportant une pièce d'adaptation reliée par boulonnage à un flasque périphérique (3) de l'enveloppe avec interposition d'un joint d'étanchéité (15) et venant brider au moins un socle (4) d'isolateur de câble par vissage avec une pièce de maintien inférieure (6) avec interposition de joints d'étanchéité (8, 9), fond caractérisé en ce que la pièce d'adaptation est constituée d'au moins deux parties (5, 10) concentriques reliées l'une à l'autre de façon démontable et étanche, dont l'une (5) dite première pièce assure le bridage du ou des socle(s) (4) d'isolateur (2) et dont une autre (10) dite deuxième pièce est annulaire et est reliée au flasque (3) de l'enveloppe (1).

2. Fond d'enveloppe selon la revendication 1, caractérisé en ce qu'une partie de la pièce d'adaptation est libérable par désolidarisation et déplacement vers le bas.

3. Fond d'enveloppe selon la revendication 2, caractérisé en ce que la deuxième pièce (10) est libérable de la première pièce (5) par désolidarisation et déplacement vers le bas.

4. Fond d'enveloppe selon la revendication 3, caractérisé en ce que le diamètre intérieur (D2) de la deuxième pièce (10) est supérieur à l'encombrement maximal (D1) de la ou des pièce(s) de maintien inférieure(s) (6).

5. Fond d'enveloppe selon la revendication 3, caractérisé en ce que la première pièce (5) comporte à sa périphérie un talon supérieur coopérant avec un talon inférieur (11) de la deuxième pièce (10).

6. Fond d'enveloppe selon la revendication 3, caractérisé en ce que la première (5) et la deuxième (10) pièces sont solidarisées par boulonnage.

7. Fond d'enveloppe selon la revendication 5, caractérisé en ce que le diamètre extérieur (D4) de la première pièce (5) est inférieur au diamètre intérieur (D3) de l'enveloppe (1).

8. Fond d'enveloppe selon la revendication 4, destiné au support de trois socles d'isolateur de câble, caractérisé en ce que l'encombrement maximal (D1) est égal au diamètre du cercle circonscrit aux trois pièces de maintien inférieures (6).

## Patentansprüche

1. Hüllenboden eines Hochspannungsgeräts, das sich in einer metallischen Hülle mit Gasisolation befindet, insbesondere für den Kabelanschluß, mit einem Anpassungsstück, das mit Bolzen an einen peripheren Flansch (3) unter Einfügung eines Dichtungsrings (15) angeschraubt ist und mindestens einen Sockel (4) eines Kabelisolators durch Verschraubung mit einem unteren Halteteil (6) unter Zwischenfügung von Dichtungsringen (8, 9) einspannt, dadurch gekennzeichnet, daß das Anpassungsstück aus mindestens zwei zueinander konzentrischen Teilen (5, 10) besteht, die aneinander demontierbar und dicht befestigt sind, wobei das erste Teil (5) die Einspannung des sockels des Isolators oder der Sockel (4) der Isolatoren (2) bewirkt, während das andere Teil (10) ringförmig ausgebildet und mit dem Flansch (3) der Hülle (1) verbunden ist.

2. Hüllenboden nach Anspruch 1, dadurch gekennzeichnet, daß ein Teil des Anpassungsstücks durch Lösen der Verbindung und Verschiebung nach unten ablösbar ist.

3. Hüllenboden nach Anspruch 2, dadurch gekennzeichnet, daß das zweite Teil (10) vom ersten Teil (5) durch Lösen der Verbindung und Verschiebung nach unten lösbar ist.

4. Hüllenboden nach Anspruch 3, dadurch gekennzeichnet, daß der Innendurchmesser (D2) des zweiten Teils (10) größer als die maximale Abmessung (D1) des unteren Halteteils (6) oder der unteren Halteteile ist.

5. Hüllenboden nach Anspruch 3, dadurch gekennzeichnet, daß das erste Teil (5) an seiner Peripherie einen oberen Absatz aufweist, der mit einem unteren Absatz (11) des zweiten Teiles (10) zusammenwirkt.

6. Hüllenboden nach Anspruch 3, dadurch gekennzeichnet, daß das erste (5) und das zweite Teil (10) durch Bolzen miteinander verbunden sind.

7. Hüllenboden nach Anspruch 5, dadurch gekennzeichnet, daß der Außendurchmesser (D4) des ersten Teils (5) kleiner als der Innendurchmesser (D3) der Hülle (1) ist.

8. Hüllenboden nach Anspruch 4, der drei Kabelisolatorsockel tragen soll, dadurch gekennzeichnet, daß die maximale Abmessung (D1) dem Durchmesser des Kreises entspricht, der die drei unteren Halteteile (6) umschreibt.

## Claims

1. Jacket bottom for gas-insulated metal-jacketed high-voltage equipment, in particular cable connection equipment, comprising an adapter member bolted to a peripheral flange (3) of the jacket with a seal (15) between them and clamping at least one cable insulator base (4) by screwing engagement with a lower retaining part (6) with seals (8, 9) disposed between them, characterised in that the adapter member is in at least two concentric parts (5, 10) joined together removably and in a sealed manner, and one of which (5) called the third part clamps the base(s) (4) of the insulator (2) and another of which (10) called the second part is annular and is joined to the flange (3) of the jacket (1).

2. Jacket bottom according to claim 1 characterised in that part of the adapter member is releasable by unfastening it and moving it downwards.

3. Jacket bottom according to claim 2 characterised in that the second part (10) is releasable from the first part (5) by unfastening it and moving it downwards.

4. Jacket bottom according to claim 3 characterised in that the inside diameter (D2) of the second part (10) is greater than the maximal overall size (D1) of the lower retaining part(s) (6).

5. Jacket bottom according to claim 3 characterised in that the first part (5) has at its edge an upper lug cooperating with a lower lug (11) of the second part (10).

6. Jacket bottom according to claim 3 characterised in that the first part (5) and the second part (10) are bolted together.

7. Jacket bottom according to claim 5 characterised in that the outside diameter (D4) of the first part (5) is less than the inside diameter (D3) of the jacket (1).

8. Jacket bottom according to claim 4 adapted to support three cable insulator bases characterised in that the maximal overall dimension (D1) is equal to the diameter of the circle circumscribing the three lower retaining parts (6).
